# EUROPÄISCHE PATENTSCHRIFT

(11) **EP 0 612 793 B1**
(45) Veröffentlichungstag und Bekanntmachung des Hinweises auf die Patenterteilung: **06.05.1998**
(21) Anmeldenummer: 94102025.7
(22) Anmeldetag: 10.02.1994
(51) Int. Cl.: C08J 11/16, C08L 61/20

(54) **Verfahren zum Recycling von gehärteten Aminoplastharzen**
Process for recycling cured aminoplast resins
Procédé de recyclage de résines aminoplastes durcies

(30) Priorität: 20.02.1993 DE 4305298
(43) Veröffentlichungstag der Anmeldung: 31.08.1994
(73) Patentinhaber: BASF Aktiengesellschaft, 67063 Ludwigshafen (DE)
(72) Erfinder: Weisen, Jürgen, Dr., D-69198 Schriesheim (DE); Reuther, Wolfgang, Dr., D-69118 Heidelberg (DE); Hahn, Erwin, Dr., D-69118 Heidelberg (DE)

(56) Entgegenhaltungen:
- EP-A- 0 074 519
- DD-A- 155 779
- DATABASE WPI Derwent Publications Ltd., London, GB; AN 86-203659[31] & SU-A-1 201 739 (URALS HALURGY RES.) 30. Dezember 1985
- DATABASE WPI Derwent Publications Ltd., London, GB; AN 86-203659[31] & SU-A-1 201 739

## Beschreibung

Die Erfindung betrifft ein Verfahren zum Recycling von gehärteten Melaminharzen, insbesondere für das Recycling von Formkörpern, die gehärtete Melaminharze enthalten oder aus diesen bestehen.

Für das Recycling von Polymeren können verschiedene Verfahren beschritten werden. Ein inzwischen häufig angewandtes Verfahren besteht im mechanischen Zerkleinern des möglichst sortenreinen Polymeren und einer anschließenden thermoplastischen Umformung. Dies ist jedoch bei gehärteten Melaminharzen nur eingeschränkt durchführbar. Zwar kann das gehärtete Melaminharz mechanisch zerkleinert werden, jedoch ist eine thermische Umformung unmöglich. Es besteht nur die Möglichkeit, das gemahlene Harzpulver mittels geeigneter Zusätze zu neuen Formkörpern zu verbinden.

Melaminharze werden zunehmend zu Formkörpern wie Fasern oder Schaumstoffen verarbeitet (vgl. DE-A-23 64 091, DE-A-27 54 525, DE-A-29 15 457, DE-A-41 23 050 und EP-A-408 947). Damit stellt sich aber auch die Frage nach einem stofflichen Recycling dieser Produkte.

Aufgabe der vorliegenden Erfindung war es nun, ein Verfahren zum Recycling von gehärteten Melaminharzen aufzuzeigen, das das chemische Recycling von Formkörpern ermöglicht, die Melaminharze enthalten oder aus diesen bestehen.

Demgemäß wurde ein Verfahren zum Recycling von gehärteten Melaminharzen gefunden, bei dem gehärtete Melaminharze, die gegebenenfalls Füllstoffe enthalten können, mit einer wäßrigen Sulfit-, Hydrogensulfit- oder Disulfitlösung umgesetzt werden, wobei sich eine klare Lösung bildet, aus der mit fortschreitender Reaktion Melamin und/oder wasserunlösliche Melamin-Derivate ausfallen, die nach dem Ende der Reaktion und Abkühlen auf Raumtemperatur von der Lösung abgetrennt und in chemischen Prozessen eingesetzt werden.

Gegenstand der Erfindung sind außerdem niedermolekulare Abbauprodukte von gehärteten Melaminharzen, die dadurch erhältlich sind, daß gehärtete Melaminharze, die gegebenenfalls Füllstoffe enthalten können, mit einer wäßrigen Sulfit-, Hydrogensulfit- oder Disulfitlösung derart umgesetzt werden, daß sich eine klare Lösung bildet, aus der mit fortschreitender Reaktion Melamin und/oder wasserunlösliche Melamin-Derivate ausfallen, die nach dem Ende der Reaktion und Abkühlen auf Raumtemperatur von der Lösung abgetrennt werden.

Gegenstand der Erfindung ist darüberhinaus die Verwendung dieser niedermolekularen Abbauprodukte zur Beschichtung von Formkörpern, vorzugsweise Spanplatten, sowie zur Gerbung von Häuten und Fellen und zur Herstellung von Formkörpern, die Melaminharze enthalten oder aus diesen bestehen.

Aus der deutschen Patentanmeldung P 42 42 046.6 ist ein Verfahren zum chemischen Abbau von gehärteten Aminoplastharzen bekannt, bei dem gehärtete Aminoplastharze, die gegebenenfalls Füllstoffe enthalten können, mit einem primären und/oder sekundären Amin bei Temperaturen von 40 bis 250°C umgesetzt werden.

Aus der DD 155 779 ist ein Verfahren zur Entfernung gehärteter Aminoplaste aus Produktionsanlagen bekannt, bei dem man die ausgehärteten Aminoplaste mit wäßrigen, 1 bis 70 gew.-%igen Ammonium-, Alkali- oder Erdalkalisulfitlösungen oder Ammonium-, Alkali- oder Erdalkalihydrogensulfitlösungen oder Gemischen dieser Lösungen bei Temperaturen von 20 bis 100°C auflöst und beim Lösevorgang ein Gewichtsverhältnis von aufzulösendem Plast zu Lösungsmittel von 1 zu 1 bis 1 zu 10 einhält.

Erfindungsgemäß sind gehärtete Melaminharze beispielsweise Kondensationsprodukte von Melamin mit Aldehyden, insbesondere mit Formaldehyd.

Bevorzugte Melaminharze sind hierbei die Kondensationsprodukte aus Melamin bzw. Melaminderivaten und Formaldehyd, wie sie beispielsweise in der EP-A-221 330 und der EP-A-408 947 beschrieben sind.

Das im erfindungsgemäßen Verfahren eingesetzte Melaminharz wird im allgemeinen durch mechanische Zerkleinerung von Formkörpern aus Aminoplastenen wie beispielsweise Fasern und Schaumstoffen erhalten. Das dabei erhaltene feinteilige Melaminharz kann anschließend ohne weitere Vorbehandlung im erfindungsgemäßen Verfahren eingesetzt werden.

Die in den Formkörpern aus Aminoplasten vorliegenden Füllstoffe stören hierbei im allgemeinen nicht.

Füllstoffe sind hierbei im allgemeinen faser- oder pulverförmige anorganische Verstärkungsmittel oder Füllstoffe, wie Glasfasern, Metallpulver, Metallsalze oder Silikate, z.B. Kaolin, Talkum, Schwerspat, Quarz oder Kreide, ferner Pigmente und Farbstoffe und Flammschutzmittel.

Erfindungsgemäß wird das gehärtete Melamin-Harz im allgemeinen mit 1- bis 80 %iger, insbesondere 20- bis 40 %iger wäßriger Alkali-, Erdalkali- oder Ammoniumsulfitlösung oder Alkali-, Erdalkali- oder Ammonium-hydrogensulfit-Lösung bei Temperaturen von 20 bis 150°C umgesetzt. Das Gewichtsverhältnis von Lösungsmittel zu Aminoplastharz hängt hierbei von dem entsprechenden Harz und der Konzentration der Lösung ab. Es liegt in der Regel zwischen 1:1 und 1:30. Der pH-Wert liegt in der Regel zwischen 4 und 7. Die Reaktionsdauer ist abhängig von der Temperatur und beträgt im allgemeinen zwischen 3 und 60 Stunden. Bei Temperaturen über 100°C wird zweckmäßigerweise unter Druck gearbeitet.

Die Reaktionsdauer ist außerdem abhängig von der Oberfläche des eingesetzten Harzes.

Im allgemeinen verläuft die Reaktion so, daß je nach Oberfläche des gemahlenen Harzes nach ca. 1 bis 8 Stunden sich eine klare Lösung bildet. Dabei kommt es mit fortschreitender Reaktion selbst bei Temperaturen um 100°C zu einer Ausfällung von monomeren Melamin-Derivaten. Nach dem Ende der Reaktion und Abkühlen auf Raumtemperatur können diese Produkte auf einfache Weise, beispielsweise durch Filtration, entfernt werden. Die Mutterlauge kann erneut zu weiteren Umsetzungen verwendet werden.

Das durch Filtration entfernte weiße Pulver ist im Falle von Melamin-Formaldehyd-Harzen ein definiertes Gemisch aus Methylol-Melaminen und den entsprechenden mit Sulfit-Gruppen modifizierten Methylol-Melaminen. Die Anzahl der Methylol-Gruppen hängt dabei von dem Melamin-Formaldehyd-Verhältnis des eingesetzten Harzes ab. Die Rückgewinnung des Melamin-Bausteines aus dem Harz liegt im allgemeinen zwischen 70 und 95 %.

Das erfindungsgemäße Verfahren kann auch in Gegenwart eines wasserlöslichen organischen Lösungsmittels (z.B. eines Alkohols) durchgeführt werden.

Gehärtete Melamin-Harze können erfindungsgemäß in entsprechend funktionalisierte monomere Derivate überführt werden, die einfach zu isolieren sind und für verschiedene chemische Prozesse eingesetzt werden können.

Dadurch ist es möglich, Formkörper aus Melaminharzen auf einfache und wirtschaftliche Weise einer stofflichen Wiederverwertung zuzuführen.

Die erfindungsgemäßen funktionalisierten monomeren Derivate werden (niedermolekulare Abbauprodukte) erfindungsgemäß in Form der isolierten festen Produkte in chemischen Verfahren eingesetzt. Je nach Aufarbeitung der Lösung können hierbei Produktfraktionen erhalten werden, in denen Methylol- und Sulfitgruppen-Substituenten in unterschiedlichen Mengen enthalten sind.

Die methylolgruppenreichen Produktfraktionen können gemäß der EP-A-0 520 182 in Kondensationsprodukte eingearbeitet werden, welche als Gerbstoffe zum Gerben von Blößen und Fellblößen und zum Nachgerben von Leder und Fellen verwendet werden können.

Unter Blößen und Fellblößen versteht man hierbei die von Oberhaut- und Unterhautbindegeweben befreite, ungegerbte Lederhaut.

Die an Methylolgruppen reichen Produktfraktionen werden hierbei im allgemeinen in einer Menge von 1 bis 5 Gew.-%, bezogen auf das Kondensationsprodukt, eingesetzt.

Weiterhin können die erfindungsgemäßen niedermolekularen Abbauprodukte als Kondensationskomponente im allgemeinen in eine Menge von 1 bis 5 Gew.-%, bezogen auf das Harz, in Leim- und Tränkharzen dienen, wie sie insbesondere zur Verleimung von lignocellulosehaltigen Formkörpern Verwendung finden.

Ein weiteres Beispiel ist der Einsatz der erfindungsgemäßen niedermolekularen Abbauprodukte als Modifizierungskomponente in Melamin-Formaldehyd-Harzen, wie sie in der DE-A-29 15 457, der DE-A-23 64 091, der EP-A-221 330 und der DE-A-41 23 050 beschrieben sind. Diese Harze können anschließend beispielsweise zu textilen Fasern versponnen werden.

Die in den Beispielen angegebenen Prozente und Teile beziehen sich auf das Gewicht.

Abbau der Melaminharze (Beispiele 1 bis 4)

### Beispiel 1

20 g eines gemahlenen, ausgehärteten Melamin-Formaldehyd-Harzes mit einem Molverhältnis von Melamin zu Formaldehyd von 1:3 (M:F=1:3) wurden in 200 g 40 %iger Natriumdisulfit-Lösung bei 100°C gerührt. Nach 5 h bildete sich eine klare Lösung, die sich nach weiteren 20 h stark eintrübte. 48 h nach dem Beginn der Reaktion wurde auf Raumtemperatur abgekühlt, der weiße Niederschlag abfiltriert, mit 10 g Wasser nachgewaschen und getrocknet.
Ausbeute: 12,5 g

Der Niederschlag bestand gemäß HPLC-Analyse (Auswertung der Flächen) aus:

| | |
|---|---|
| Dimethylol-melamin-sulfonsäure | 28 Mol.-% |
| Monomethylol-melamin-sulfonsäure | 53 Mol.-% |
| Dimethylolmelamin | 9 Mol.-% |
| Monomethylolmelamin | 10 Mol.-% |

### Beispiel 2

3,42 kg eines gemahlenen, ausgehärteten Melamin-Formaldehyd-Harzes (M:F=1:3) wurden in 49 kg 20 %iger Natrium-disulfit-Lösung bei 100°C gerührt. Nach 6 h bildete sich eine klare Lösung, die sich nach weiteren 12 h stark eintrübte. 24 h nach dem Beginn der Reaktion wurde auf Raumtemperatur abgekühlt, der weiße Niederschlag abfiltriert, mit 3 l Wasser nachgewaschen und getrocknet.
Ausbeute: 3,04 g

Der Niederschlag bestand gemäß HPLC-Analyse (Auswertung der Flächen) aus:

| | |
|---|---|
| Dimethylol-melamin-sulfonsäure | 20 Mol.-% |
| Monomethylol-melamin-sulfonsäure | 50 Mol.-% |
| Dimethylolmelamin | 15 Mol.-% |
| Monomethylolmelamin | 15 Mol.-% |

### Beispiel 3

5 g eines gemahlenen, ausgehärteten Melamin-Formaldehyd-Harzes (M:F=1:2) wurden in 200 g 20 %iger Natrium-disulfit-Lösung bei 100°C gerührt. Nach 8 h bildete sich eine fast klare Lösung, die sich nach weiteren 20 h stark eintrübte. 48 h nach dem Beginn der Reaktion wurde auf Raumtemperatur abgekühlt, der weiße Niederschlag abfiltriert, mit 10 g Wasser nachgewaschen und getrocknet.
Ausbeute: 2,7 g

Der Niederschlag bestand gemäß HPLC-Analyse (Auswertung der Flächen) aus:

| | |
|---|---|
| Dimethylol-melamin-sulfonsäure | 7 Mol.-% |
| Monomethylol-melamin-sulfonsäure | 44 Mol.-% |
| Dimethylolmelamin | 10 Mol.-% |
| Monomethylolmelamin | 35 Mol.-% |
| Melamin | 4 Mol.-% |

Verwendung der niedermolekularen Abbauprodukte (Beispiele 4 bis 6)

### Beispiel 4

### Kondensationsprodukte zur Gerbung von Leder und Fellen

141 g (1,5 mol) Phenol wurden mit 168 g (1,65 mol) konzentrierter Schwefelsäure 3 h bei 105°C gerührt. Nach Zugabe von 69 g Wasser wurden 81 g (1,35 mol) Harnstoff und 8,13 g (1,86 Gew.-%) sulfitmodifizierte Methylolmelamine (Produkt von Beispiel 3) zugefügt. Zusätzlich wurde innerhalb von 100 Minuten 278 g (2,78 mol) 30 %iges wäßriges Formaldehyd bei 65 bis 70°C zudosiert. Nach 15 min. Rühren wurde bei 65 bis 70°C mit 138 g (1,73 mol) 50 %iger NaOH ein pH-Wert von 2,0 eingestellt. Die Lösung wurde bei 90°C 2 h gerührt, anschließend mit 22,5 g (0,28 mol) 50 %iger wäßriger NaOH auf einen pH-Wert von 7,0 eingestellt. Durch Zugabe von 69 g einer Mischung aus 30 Teilen Bernsteinsäure, 42 Teilen Glutarsäure und 28 Teilen Adipinsäure wurde der pH-Wert auf 3,6 eingestellt. Mit 340 g Wasser wurde ein Feststoffgehalt von 40 % eingestellt.
Viskosität (20°C): 28 mPas
pH-Wert: 3,6

### Beispiel 5

### Kondensationsharz zur Beschichtung von Spanplatten

219 g Melamin, 6,2 g Natriumdisulfit, 11,5 g Methylol-Verbindung (Produkt von Beispiel 3), 208 g 40 %iger, wäßriger Formaldeyhd, 18,9 g Butandiol-(1,4), 4,8 g Ethylenglykol, 126 g Wasser und 1,3 g Sulfanilamid wurden gemischt. Die Mischung wurde mit NaOH auf pH = 8,45 eingestellt und 0,9 ml Diethylethanolamin zugegeben. Es wurde auf 105°C erhitzt bis die Lösung klar wurde und anschließend die Temperatur auf 96°C gesenkt. Es wurde bis zu einem Trübungspunkt TRP(1:5) von 47°C kondensiert. Trübungspunkt TRP(1:5) bedeutet hierbei die Temperatur, bei der bei einer Mischung von Harzlösung zu Wasser im Gewichtsverhältnis von 1 zu 5 Ausfällung eintritt.
pH-Wert: 10,5
d = 1,2359 g/cm³
Viskosität (20°C) = 53 mPas
Feststoffgehalt = 55 %

### Beispiel 6

### Melamin-Formaldehyd-Kondensationsharz mit Zusatz von methylolierter Verbindung

170,1 g (0,9 mol) Melamin und 61,7 g einer 80 %igen, wäßrigen Lösung von N,N',N"-Tris-(5-hydroxi-3-oxapentyl)melamin (0,1 mol) wurden mit 45,8 g Paraformaldehyd, 3,72 g Bisphenol A, 1,5 ml Diethylamino-ethanol und 110,7 g 40 %igen, wäßrigen Formaldehydlösung sowie 1,6 g Methylol-Verbindung gemischt. Die Reaktionsmischung wurde solange unter Rückfluß erhitzt, bis sie eine Viskosität von 630 Pa·s aufwies (Temperatur 98°C).

Die Verspinnung des Kondensationsharzes zu Fasern erfolgte gemäß der DE-A-41 23 050.

## Patentansprüche

1. Verfahren zum Recycling von gehärteten Melaminharzen, dadurch gekennzeichnet, daß gehärtete Melaminharze, die gegebenenfalls Füllstoffe enthalten können, mit einer wäßrigen Sulfit-, Hydrogensulfit- oder Disulfitlösung umgesetzt werden, wobei sich eine klare Lösung bildet, aus der mit fortschreitender Reaktion Melamin und/oder wasserunlösliche Melamin-Derivate ausfallen, die nach dem Ende der Reaktion und Abkühlen auf Raumtemperatur von der Lösung abgetrennt und in chemischen Prozessen eingesetzt werden.

2. Niedermolekulare Abbauprodukte von gehärteten Melaminharzen, erhältlich durch derartige Umsetzung von gehärteten Melaminharzen mit einer wäßrigen Sulfit-, Hydrogensulfit- oder Disulfitlösung, daß sich eine klare Lösung bildet, aus der mit fortschreitender Reaktion Melamin und/oder wasserunlösliche Melamin-Derivate ausfallen, die nach dem Ende der Reaktion und Abkühlen auf Raumtemperatur von der Lösung abgetrennt werden.

3. Verwendung von niedermolekularen Abbauprodukten gemäß Anspruch 2 zur Beschichtung von Formkörpern.

4. Verwendung von niedermolekularen Abbauprodukten gemäß Anspruch 2 zur Gerbung von Häuten und Fellen.

5. Verwendung von niedermolekularen Abbauprodukten gemäß Anspruch 2 zur Herstellung von Formkörpern, die gehärtete Melaminharze enthalten oder aus diesen bestehen.

## Claims

1. A process for recycling cured melamine resins, wherein cured melamine resins, which may contain fillers, are reacted with an aqueous sulfite, hydrogen sulfite or disulfite solution to form a clear solution out of which melamine and/or water-insoluble melamine derivatives precipitate as the reaction proceeds, which are removed from the solution after the end of the reaction and cooling to room temperature and are used in chemical processes.

2. A low molecular weight degradation product of cured melamine resins, obtainable by reacting cured melamine resins with an aqueous sulfite, hydrogen sulfite or disulfite solution so as to form a clear solution out of which melamine and/or water-insoluble melamine derivatives precipitate as the reaction proceeds, which are removed from the solution after the end of the reaction and cooling to room temperature.

3. Use of a low molecular weight degradation product as claimed in claim 2 for coating moldings.

4. Use of a low molecular weight degradation product as claimed in claim 2 for tanning hides and skins.

5. Use of a low molecular weight degradation product as claimed in claim 2 for the production of moldings which contain cured melamine resins or consist thereof.

## Revendications

1. Procédé de recyclage de résines de mélamine durcies, caractérisé en ce que l'on fait réagir des résines de mélamine durcies qui peuvent éventuellement contenir des charges, avec une solution aqueuse de sulfite, d'hydrogénosulfite, ou de disulfite, réaction au cours de laquelle se forme une solution claire, à partir de laquelle précipitent, au cours de la poursuite de la réaction, de la mélamine et/ou des dérivés de la mélamine insolubles dans l'eau, que l'on sépare d'avec la solution après l'achèvement de la réaction et le refroidissement jusqu'à la température ambiante et que l'on utilise dans des processus chimiques.

2. Produits de dégradation de résines de mélamine durcies, de bas poids moléculaires, que l'on peut obtenir par la réaction de résines de mélamine durcies avec une solution aqueuse de sulfite, d'hydrogénosulfite, ou de disulfite, telle que se forme une solution claire, à partir de laquelle précipitent, au cours de la poursuite de la réaction, de la mélamine et/ou des dérivés de mélamine insolubles dans l'eau, que l'on sépare d'avec la réaction après l'achèvement de la réaction et le refroidissement jusqu'à la température ambiante.

3. Utilisation de produits de dégradation de bas poids moléculaires suivant la revendication 2, en vue du revêtement d'articles moulés.

4. Utilisation de produits de dégradation de bas poids moléculaires suivant la revendication 2 pour le tannage de peaux et de fourrures.

5. Utilisation de produits de dégradation de bas poids moléculaires suivant la revendication 2 pour la fabrication d'articles moulés, qui contiennent des résines de mélamine durcies ou qui en sont constitués.
